# FASCICULE DE BREVET EUROPEEN

(11) **EP 0 614 805 B1**
(45) Date de publication et mention de la délivrance du brevet: **27.05.1998**
(21) Numéro de dépôt: 94400439.9
(22) Date de dépôt: 02.03.1994
(51) Int. Cl.: B64C 25/42

(54) **Dispositif de freinage électrohydraulique d'un train de roues d'aéronef**
Elektrohydraulische Bremsvorrichtung für das Fahrwerk eines Flugzeugs
Electrohydraulic braking device for the landing gear of a aircraft

(30) Priorité: 08.03.1993 FR 9302640
(43) Date de publication de la demande: 14.09.1994
(73) Titulaire: MESSIER BUGATTI, F-78140 Velizy Villacoublay (FR)
(72) Inventeur: Bourguet, Vincent, F-91600 Savigny-Sur-Orge (FR)
(74) Mandataire: Jaunez, Xavier

(56) Documents cités:
- WO-A-91/11352
- DE-B- 1 118 020
- FR-A- 2 038 801
- FR-A- 2 608 987
- US-A- 3 926 479
- US-A- 5 024 491

## Description

La présente invention concerne le freinage contrôlé d'un train de roues d'aéronef, et plus particulièrement un dispositif de freinage électro-hydraulique d'un train de roues dont les roues sont réparties en deux groupes agencés symétriquement de part et d'autre d'un plan longitudinal médian de l'aéronef, du type dans lequel chaque roue est équipée d'un frein actionné à partir de pédales de frein, par une servo-valve de freinage et d'anti-patinage associée commandée électriquement par une unité de pilotage qui mesure des informations correspondant à l'enfoncement desdites pédales et à la vitesse de cette roue, selon le préambule de la revendication 1.

Un dispositif de freinage de ce type est par exemple illustré dans le document WO-A-91 11352. Dans ce dispositif de freinage, on trouve une commande de freinage électro-hydraulique dont la source de pression hydraulique est dédoublée : le circuit secours (secondaire) intervient automatiquement pour le freinage si la pression dans le circuit normal (primaire) descend en franchissant un seuil prédéterminé en-dessous de la pression régnant dans le circuit secours. Le système est par suite très redondant, car il faut prévoir deux valves par frein (une pour le circuit primaire et une pour le circuit secondaire).

Plus généralement, il existe déjà de nombreux dispositifs de freinage qui sont équipés d'un circuit hydraulique utilisé lorsque les conditions sont normales, et d'un circuit hydraulique de secours alimenté par une autre source de pression hydraulique, intervenant en cas de panne.

Selon un premier exemple, il est prévu un dispositif de freinage mécano-hydraulique dont les deux sources de pression hydraulique arrivent sur un sélecteur amont prévu pour effectuer une commutation automatique. On pourra à cet effet se référer aux documents US-A-5.024.491 et US-A-3.926.479. En aval du sélecteur automatique, on trouve deux circuits hydrauliques séparés, avec un circuit normal reliant un premier double distributeur progressif aux freins de roues, par l'intermédiaire d'une servo-valve associée à chaque frein qui est commandée électriquement par l'unité de pilotage, et un circuit de secours reliant un deuxième double distributeur progressif aux freins de roues, par l'intermédiaire de clapets navettes associés. Les deux distributeurs progressifs sont actionnés directement par les pédales de frein, par l'intermédiaire d'une tringlerie associée. La présence des clapets navettes prévus sur le circuit de secours peut différer selon le type de freins utilisés. En effet, avec des freins à double cavité, chaque servo-valve du circuit normal attaque un demi-frein de la roue concernée, et chaque servo-valve du circuit de secours attaque l'autre demi-frein de la paire de roues associée (gauche ou droite), tandis qu'avec des freins à simple cavité, le circuit de secours relie le double distributeur progressif correspondant aux paires de roues (gauches ou droites) par l'intermédiaire d'une servovalve (commandée par l'unité de pilotage) associée à chaque paire de roues, et les clapets navettes de ce circuit de secours peuvent être intégrés aux freins. On pourra à ce titre se référer au document EP-A-0443213 où est décrit un agencement de ce type pour une paire de roues, dont le pilotage est spécialement conçu pour augmenter la durée de vie des freins à disques en carbone.

L'inconvénient d'un tel dispositif réside dans la rigidité de son utilisation, principalement du fait du sélecteur automatique amont, qui ne permet pas de tirer un parti optimal des redondances prévues sur le circuit. En effet, ce sélecteur privilégie systématiquement le circuit normal sur le circuit secours, par une comparaison entre la pression hydraulique dans le circuit normal et un pourcentage prédéterminé de la pression nominale. Par suite, une panne intervenant en aval du sélecteur n'est pas "vue" par le sélecteur automatique, de sorte qu'on ne passe pas dans ce cas sur le circuit secours. De plus, comme le pilote ne peut pas choisir entre le circuit normal et le circuit secours, le circuit secours ne peut pas être utilisé en appoint, de sorte que pour le parcage, il est nécessaire de prévoir un troisième circuit hydraulique branché sur la source de pression du circuit secours, et reliant un distributeur commandé mécaniquement aux clapets navettes de ce circuit secours. En outre, en cas de panne mineure sur le circuit normal (par exemple un mauvais fonctionnement d'une servo-valve qui assure également la fonction d'anti-patinage), le calculateur de l'unité de pilotage émet un signal d'alerte, mais le pilote n'a pas d'autre choix que d'utiliser le frein de parcage pour faire face à cette panne.

On connaît un deuxième exemple, proche du précédent dans l'agencement de son circuit normal et de son circuit de secours, si ce n'est que les deux circuits aboutissent à des clapets navettes associés à chaque frein de roue. Les commandes sont agencées différemment, dans la mesure où les pédales de frein sont reliées aux deux doubles distributeurs progressifs, non pas par une tringlerie, mais par des maîtres-cylindres qui pilotent la pression : la commande de freinage est donc de type hydro-hydraulique. Ce système est plus facile à installer que le précédent, et supprime la nécessité d'équilibrer les tensions dans une câblerie. De plus, une commande électrique permet au pilote d'intervenir directement sur le sélecteur automatique, de façon à utiliser ad libitum le circuit secours. Cependant, cette commande n'est déclenchée que par l'intervention du pilote, de sorte que l'action est nécessairement aléatoire, en étant éventuellement trop tardive et/ou mal adaptée aux conditions rencontrées, et ce a fortiori lorsque le pilote doit simultanément faire face à d'autres problèmes (incendie sur un réacteur par exemple) : le risque d'erreur humaine pénalise donc ce type de dispositif.

On connaît un troisième exemple, de conception mixte, avec un circuit de secours à commande hydro-hydraulique par maîtres-cylindres (comme pour le deuxième exemple), mais avec un circuit normal à commande électro-hydraulique comportant une électrovanne supplémentaire (fonctionnant en tout ou rien) prévue en amont du sélecteur automatique : si l'électrovanne est fermée, le sélecteur commute automatiquement sur le circuit secours. Le circuit secours est alors seul équipé d'un double distributeur progressif relié aux pédales de frein par des maîtres-cylindres. Un dispositif de ce type est illustré dans le document FR-A-2.608.987 (& US-A-4.834.465) de la demanderesse. Ce dispositif a ainsi l'avantage d'être plus souple que les dispositifs précédents, car, en cas de panne, le calculateur de l'unité de pilotage permet de passer automatiquement sur le circuit secours, de sorte que l'on tire un meilleur parti des redondances prévues sur le circuit. Cependant, on retrouve les inconvénients précités inhérents à la présence du sélecteur amont. De plus, si une panne intervient sur l'électrovanne supplémentaire, l'électrovanne étant bloquée passante, on ne peut que rester sur le circuit normal sans pouvoir profiter du circuit secours. Enfin, comme pour le premier exemple, un troisième circuit est prévu pour le parcage, avec un distributeur commandé électriquement amenant la pression sur les clapets navettes du circuit secours.

Il convient d'ailleurs de préciser que les inconvénients relevés pour les trois exemples précités, inhérents à la sélection amont entre les deux circuits principaux du dispositif de freinage, sont d'autant plus sensibles que le train de roues comporte un grand nombre de roues, ce qui pénalise ainsi encore plus gravement les systèmes équipant les gros porteurs (souvent équipés de deux atterrisseurs de voilure et de deux atterrisseurs de fuselage, soit en tout seize roues).

On peut encore signaler un quatrième exemple à commande électro-hydraulique basée sur une activation simultanée du circuit normal et du circuit secours qui sont alors tous deux agencés identiquement, un troisième circuit étant en outre prévu pour le parcage, comme pour les premier et troisième exemples. Ce couplage permanent induit une certaine rigidité, notamment pour la fonction anti-patinage assurée par les servo-valves associées à chaque frein (l'ordre d'anti-patinage dépend en effet de deux roues).

On peut enfin citer le document FR-A-2.038.801 qui décrit une architecture comprenant deux circuits indépendants, sans sélection possible, et le document DE-C-1.118.020 qui illustre un système de type mécano-hydraulique dans lequel le choix de la source hydraulique est effectué de façon automatique, là encore sans sélection possible, et simultanément pour tous les actionneurs associés (il est à noter que ce dernier système ne comporte pas de valve d'anti-patinage).

L'invention a pour but de proposer un dispositif de freinage ne présentant pas les inconvénients et/ou limitations des dispositifs mentionnés ci-dessus.

L'invention a ainsi pour objet de réaliser un dispositif de freinage dont la structure est à la fois simple et fiable (avec en particulier un nombre minimal de servo-valves), et qui permet de faire face à de multiples pannes possibles sans être tributaire de la seule intervention du pilote, en tirant un parti optimal des redondances prévues sur le circuit de freinage.

Il s'agit plus particulièrement d'un dispositif de freinage électro-hydraulique d'un train de roues d'aéronef, dont les roues sont réparties en deux groupes agencés symétriquement de part et d'autre d'un plan longitudinal médian de l'aéronef, chaque roue étant équipée d'un frein actionné à partir de pédales de frein, par une servo-valve de freinage et d'anti-patinage associée commandée électriquement par une unité de pilotage qui mesure des informations correspondant à l'enfoncement desdites pédales et à ladite vitesse de cette roue, caractérisé par le fait qu'il comporte deux sources de pression hydraulique alimentant chacune un circuit hydraulique menant, par l'intermédiaire de platines de commande de freinage à double entrée, aux freins des deux groupes de roues, avec un premier circuit reliant, par l'intermédiaire de deux clapets navettes associés chacun à un groupe de freins de roues, soit une première électrovanne commandée électriquement par l'unité de pilotage, soit un double distributeur progressif commandé mécaniquement par les pédales de frein, à une première entrée de chacune des platines de commande de freinage, et un deuxième circuit reliant directement une deuxième électrovanne, également commandée électriquement par l'unité de pilotage, à une deuxième entrée de chacune des platines de commande de freinage, chaque platine de commande de freinage étant agencée avec deux circuits internes symétriques comportant chacun une servo-valve par frein concerné, ces deux circuits internes étant en outre interconnectés au niveau d'un clapet commandé respectif et débouchant de cette platine, en aval desdits clapets commandés, par deux sorties associées de ladite platine menant aux freins de roues.

Ainsi, grâce à un tel agencement, si une panne survient sur l'un des deux circuits hydrauliques, les servo-valves associées à l'autre circuit hydraulique permettent un contrôle du freinage et de l'anti-patinage selon un mode tandem appairé, avec une reconfiguration automatique.

Selon un premier mode d'exécution, la source de pression hydraulique associée au premier circuit hydraulique est double, avec une source équipée d'un accumulateur hydraulique pour alimenter une moitié du double distributeur progressif, et une source équipée d'une troisième électro-vanne commandée électriquement par l'unité de pilotage pour alimenter l'autre moitié dudit distributeur progressif, ces deux sources alimentant en outre la première électrovanne.

En variante, la source de pression hydraulique associée au premier circuit hydraulique est une source unique alimentant simultanément chaque moitié du double distributeur progressif ainsi que la première électrovanne.

Avantageusement encore, la source de pression hydraulique associée au deuxième circuit est équipée d'un accumulateur hydraulique.

Il est par ailleurs intéressant que les clapets commandés soient des tiroirs coulissants chargés par un ressort respectif dont le tarage correspond de préférence sensiblement à la pression maximale prévue.

Dans ce cas, lorsque les deux circuits internes de chaque platine de commande de freinage ont chacun une seule sortie, les clapets commandés associés seront par exemple des tiroirs simples, et lorsque les deux circuits internes de chaque platine de commande de freinage ont chacun deux sorties, les clapets commandés associés pourront être des tiroirs doubles ou des paires de tiroirs simples.

De préférence alors, les deux circuits internes comportent un fusible hydraulique entre chaque servo-valve et le clapet commandé associé.

Avantageusement encore, le premier et le deuxième circuits hydrauliques comportent des lignes de retour qui sont respectivement reliées à chaque platine de commande de freinage, ces lignes de retour étant équipées de clapets anti-retour associés. En particulier, la ligne de retour du premier circuit hydraulique est de préférence également équipée d'une électrovanne en amont du clapet anti-retour associé, la fermeture de cette électrovanne permettant d'emprisonner la pression dans les freins pour leur blocage en position de parcage de l'aéronef.

D'autres caractéristiques et avantages de l'invention apparaîtront plus clairement à la lumière de la description qui va suivre, concernant un mode de réalisation particulier, en référence aux figures des dessins annexés, où :
- la figure 1 illustre schématiquement un dispositif de freinage électro-hydraulique conforme à l'invention, intervenant ici sur quatre roues ;
- la figure 2 représente une platine de commande de freinage à quatre sorties, pour intervenir sur quatre roues (l'aéronef comporte alors un train de huit ou seize roues) ;
- la figure 3 est une vue schématique d'un dispositif de freinage conforme à l'invention équipé de quatre platines de commande de freinage du type de celle qui est illustrée à la figure 2, pour intervenir sur un train de seize roues (un seul groupe de quatre roues est représenté sur cette figure) ;
- la figure 4a reprend la vue de la figure 3, pour illustrer le passage du fluide hydraulique dans les deux circuits (les trajets respectifs sont illustrés en traits continus et en pointillés), dans le cas d'un fonctionnement normal du dispositif de freinage ;
- les figures 4b à 4f sont des schémas analogues à celui de la figure 4a, mais dans diverses situations de pannes, illustrant ainsi le contrôle du freinage dans ces situations avec un mode tandem appairé et une reconfiguration automatique.

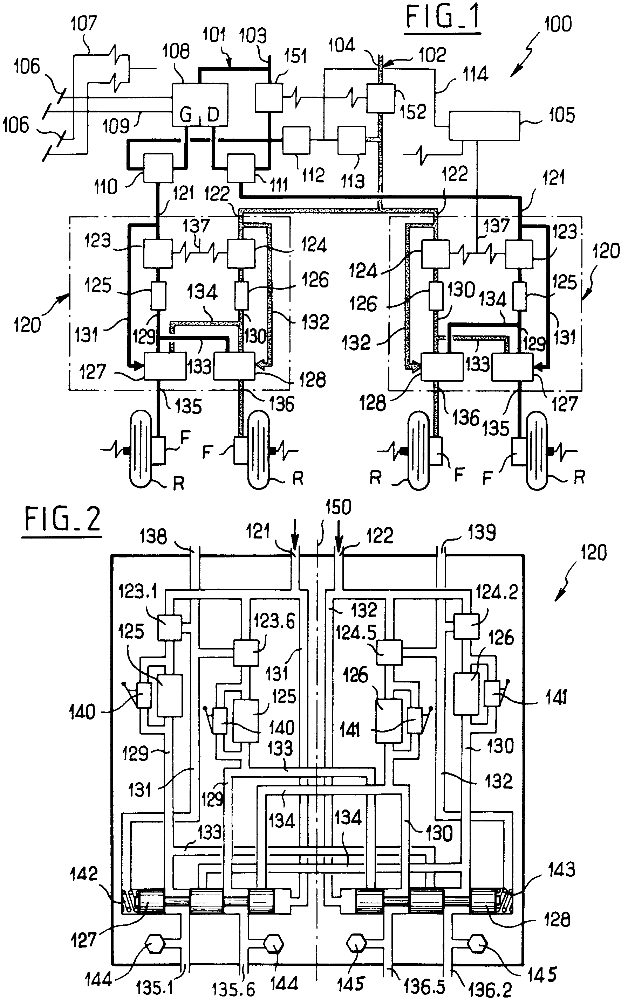

Sur la figure 1, on distingue un dispositif de freinage électro-hydraulique 100 d'un train de quatre roues R, comportant deux roues de part et d'autre d'un plan longitudinal médian de l'aéronef, chaque roue étant équipée d'un frein F actionné à partir de pédales de frein 106 (on a représenté ici des pédales de frein 106 affectées respectivement au pilote et au copilote de l'aéronef).

Le dispositif de freinage 100 comporte deux sources de pression hydraulique 103, 104 alimentant chacune un circuit hydraulique 101, 102 menant, par l'intermédiaire de platines de commande de freinage 120 à double entrée, aux freins F de deux groupes de roues R. Le premier circuit 101 alimente un double distributeur progressif 108 de conception analogue à ceux que l'on utilise traditionnellement, c'est-à-dire en aval duquel la sortie (ici double) délivre une pression hydraulique allant de 0 à la pression d'entrée, en fonction de la consigne donnée par le pilote. Sur le schéma de la figure 1, on a représenté le double distributeur progressif 108 en un bloc unique, en indiquant les lettres G et D pour schématiser les parties de cet organe qui sont associées aux roues de gauche ou de droite respectivement. Ainsi que cela sera illustré plus loin, il est naturellement possible de réaliser ce double distributeur progressif en deux distributeurs progressifs séparés, affectés chacun à un groupe de roues. En aval du double distributeur progressif 108, les deux sorties mènent chacune à un clapet navette respectif 110, 111, ces clapets recevant par ailleurs chacun la pression d'entrée de la source 103 du circuit 101, par l'intermédiaire d'une électrovanne 151 qui est commandée électriquement par le calculateur d'une unité de pilotage 105 (la liaison électrique correspondante est schématisée par une ligne 114), un capteur de pression 112 associé étant également relié à ce calculateur. En aval des clapets navettes 110, 111, on trouve deux platines de commande de freinage 120 à double entrée, dont une première entrée 121 est reliée à ces clapets navettes, les sorties correspondantes 135 de ces platines 120 menant aux freins F des roues concernées. Il est important de noter que le double distributeur progressif 108 est commandé mécaniquement par les pédales de frein, par l'intermédiaire d'une tringlerie associée 109. Ainsi qu'on le verra par la suite, lorsque le train de roues de l'aéronef comporte plus de quatre roues, on trouvera plus de deux platines de commande de freinage 120, et chaque première entrée de ces platines sera alors reliée à l'un ou l'autre des deux clapets navettes 110, 111.

Le deuxième circuit 102, qui est associé à la source de pression 104, relie directement une deuxième électrovanne 152, également commandée électriquement par l'unité de pilotage 105, à la deuxième entrée 122 de chacune des platines de commande de freinage 120. Là encore, si le train de roues comporte plus de quatre roues, le dispositif de freinage 100 sera équipé de plus de deux platines de commande de freinage 120, et la deuxième entrée de chacune de ces platines sera alors alimentée par la deuxième source hydraulique 104, par l'intermédiaire de l'électrovanne 152.

On a schématisé par les lignes 107 le raccordement entre les pédales de frein et l'unité de pilotage 105, pour rappeler que cette unité de pilotage mesure une information correspondant à l'enfoncement des pédales 106, en plus de l'information relative à la vitesse de chaque roue pour l'anti-patinage.

On perçoit immédiatement une différence fondamentale par rapport aux systèmes existants, dans la mesure où le dispositif de freinage 100 comporte deux sources de pression hydraulique séparées, qui interviennent simultanément, ces sources alimentant chacune un circuit hydraulique associé. On ne retrouve donc plus de sélection amont qui organise, automatiquement ou par une commande déclenchée par le pilote, une commutation entre un circuit normal et un circuit de secours. Au contraire, dans le cadre de l'invention, les deux circuits sont prévus pour intervenir simultanément, la sélection se faisant alors en aval, et non plus en amont, ce qui permet, ainsi que cela sera décrit plus loin, de faire face à de multiples pannes susceptibles d'intervenir sur le circuit de freinage et d'améliorer ainsi la fiabilité du contrôle du freinage.

Sur la vue schématique de la figure 1, on distingue la structure de base des deux platines de commande de freinage 120 (délimitées par des traits mixtes), chacune de ces platines étant agencée avec deux circuits internes essentiellement symétriques comportant chacun une servovalve de freinage et d'anti-patinage 123, 124 par frein concerné F, ces servo-valves étant commandées électriquement par l'unité de pilotage 105, ainsi que cela est schématisé par le raccordement 137. En aval des servovalves 123, 124, on trouve des fusibles hydrauliques 125, 126, de type traditionnel (il s'agit de limiteurs de quantité qui autorisent une perte de volume prédéterminée en sécurité à la façon d'un clapet de sécurité). On trouve ainsi deux lignes principales 129, 130, associées respectivement à chacun des circuits hydrauliques 101, 102, menant, en aval des fusibles 125, 126, à un clapet commandé respectif 127, 128, la commande de ces clapets étant ici schématisée par des lignes hydrauliques 131, 132, également respectivement associées à chacun des deux circuits 101, 102. En aval de ces clapets commandés 127, 128, on débouche de chaque platine de commande de freinage 120 par deux sorties associées 135, 136 menant aux freins de roues F. En outre, ces deux circuits internes sont interconnectés, ainsi que cela est illustré par les lignes hydrauliques 133, 134, au niveau de chaque clapet commandé respectif 127, 128, de façon qu'en cas de panne sur l'un des deux circuits hydrauliques 101, 102, les servo-valves associées à l'autre circuit hydraulique permettent un contrôle du freinage et de l'anti-patinage selon un mode tandem appairé, avec une reconfiguration automatique. Le fonctionnement du dispositif, dans une situation normale et dans diverses situations de panne, sera décrit plus loin en détail.

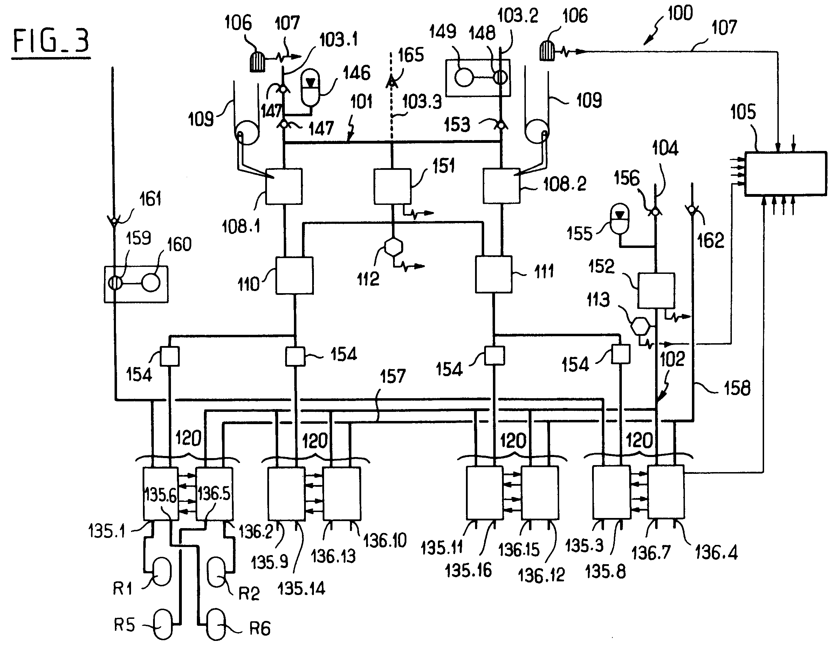

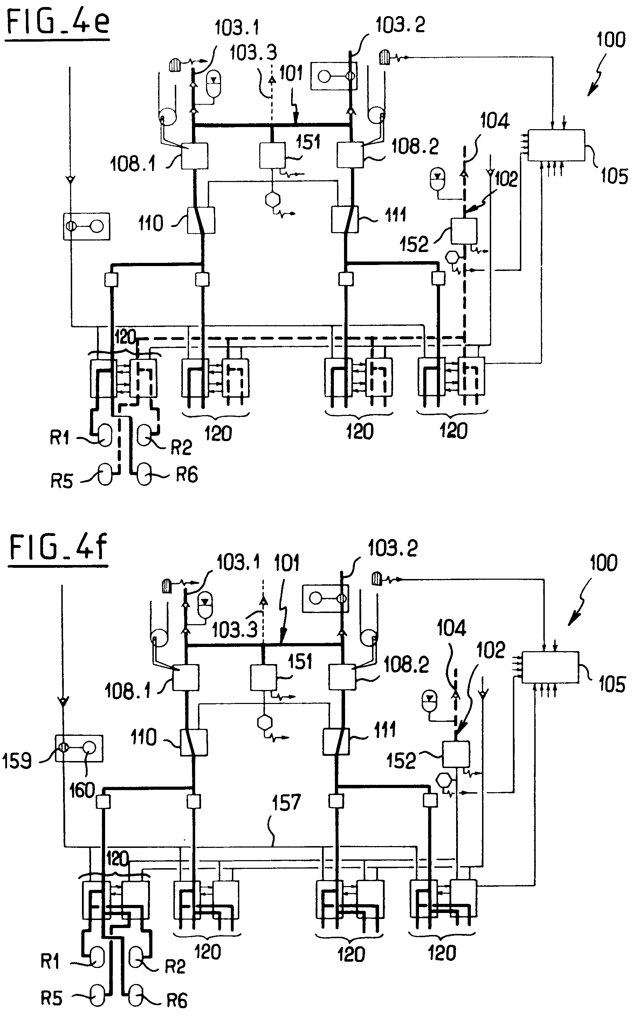

On va maintenant décrire la structure d'une platine de commande de freinage 120, à double entrée, et, à la différence de la représentation schématique donnée en figure 1, à plus de deux sorties, c'est-à-dire associées chacune au contrôle de plusieurs freins de roues : en l'espèce, on a illustré une platine de commande de freinage à quatre sorties, c'est-à-dire que cette platine est associée au contrôle du freinage et de l'anti-patinage d'un groupe de quatre roues faisant partie d'un atterrisseur de voilure ou d'un atterrisseur de fuselage. On a gardé les références 135, 136 pour les sorties de chaque moitié de la platine de commande de freinage 120, mais ces références sont ici complétées par un indice correspondant au numéro de la roue concernée. Conformément à l'habitude, les roues d'un train de roues d'aéronef sont numérotées progressivement, de gauche à droite, et successivement de l'avant vers l'arrière : avec cette notation, pour un ensemble de quatre atterrisseurs à quatre roues chacun, l'atterrisseur gauche de voilure comporte les roues numérotées 1, 2, 5, 6, conformément au schéma illustré sur la figure 3 qui sera décrit plus loin, l'atterrisseur droit de voilure comporte les roues numérotées 3, 4, 7, 8, l'atterrisseur gauche de fuselage comporte les roues numérotées 9, 10, 13, 14, et l'atterrisseur droit de fuselage comporte les roues numérotées 11, 12, 15, 16. En l'espèce, la platine de commande de freinage 120 illustrée sur la figure 2 est associée au contrôle du freinage des roues numérotées 1, 2, 5, 6, ce qui explique la notation des sorties correspondantes 135.1, 135.6, 136.5, 136.2. On constate un agencement essentiellement symétrique par rapport à un plan médian 150, cette symétrie présentant des avantages particuliers en cas de perte de la génération électrique de l'aéronef, ainsi que cela sera décrit plus loin en référence à la figure 4f.

La moitié gauche de la platine de commande de freinage 120 est associée au premier circuit 101, et l'on retrouve l'entrée correspondante 121, alimentant deux servo-valves de freinage et d'anti-patinage 123.1 et 123.6 pilotées électriquement par le calculateur de l'unité de pilotage (les servo-valves sont numérotées avec l'indice de la roue concernée, comme expliqué ci-dessus pour les sorties de la platine), puis deux fusibles hydrauliques 125, ici équipés chacun d'une dérivation 140 à clapet de sécurité, chacune des deux lignes concernées 129 arrivant sur un tiroir commandé 127 qui est ici un tiroir double, ce tiroir coulissant étant chargé par un ressort associé 142 dont le tarage correspond de préférence sensiblement à la pression maximale prévue. Le tiroir coulissant 127 est soumis, à son autre extrémité, à la pression du fluide arrivant par l'entrée 121. En aval de ce tiroir coulissant 127, on trouve deux branches de sortie menant aux sorties 135.1 et 135.6, chacune de ces branches étant ici affectée d'un capteur de pression 144 relié à l'unité de pilotage. Sur la partie droite de la platine de commande de freinage 120, on trouve un agencement essentiellement identique et symétrique au précédent, avec, en aval de l'entrée 122, deux lignes 130 comportant chacune une servo-valve de freinage et d'anti-patinage 124.5 ou 124.2, et un fusible 126 équipé d'une dérivation à clapet de sécurité 141, pour arriver enfin à un tiroir coulissant 128 en aval duquel on trouve les branches menant aux sorties 136.5 et 136.2 au niveau desquelles la pression est mesurée par un capteur associé 145. Les deux circuits de cette platine de commande de freinage 120 sont en outre complétés d'une part par les lignes de retour 131 et 132, menant aux sorties correspondantes 138, 139, associées à chacun des deux circuits internes de ladite platine, et d'autre part des lignes d'interconnexion 133 et 134 qui sont les seules à traverser la frontière médiane 150 entre les deux moitiés de cette platine.

En situation de fonctionnement normal, les deux entrées 121, 122 de chaque platine de commande de freinage 120 sont alimentées par les sources hydrauliques 103, 104 de chacun des deux circuits 101, 102. Les deux tiroirs coulissants 127, 128 sont, comme cela est illustré sur la figure 2, poussés par la pression d'alimentation correspondante à l'encontre du ressort de rappel associé 142, 143 : dans ce cas, le freinage des roues numérotées 1 et 6 est commandé par la servo-valve de freinage et d'anti-patinage respectivement associée 123.1, 123.6 et, de la même façon, le freinage des roues numérotées 5 et 2 est commandé directement par la servo-valve de freinage et d'anti-patinage respectivement associée 124.5 et 124.2. Si la force du ressort 142 l'emporte sur la pression hydraulique agissant sur l'autre extrémité du tiroir coulissant 127, ce tiroir se déplace vers la droite (sur la figure 2) en obturant les liaisons entre chaque ligne 129 et les sorties 135.1 et 135.6, et en établissant la liaison entre ces sorties et les lignes d'interconnexion associées 133, 134 : dans ce cas, le freinage (et l'anti-patinage) de la roue numérotée 1 est commandé par la servo-valve de freinage 124.2 associée à la roue numérotée 2, et le freinage (et l'anti-patinage) de la roue numérotée 6 est commandé par la servo-valve de freinage 124.5 associée au freinage de la roue numérotée 5. De la même façon, si l'action du ressort 143 l'emporte sur la pression hydraulique à laquelle est soumis le tiroir coulissant 128 (cette pression correspondant alors au deuxième circuit 102), ce tiroir se déplace vers la gauche (sur la figure 2) coupant alors la liaison entre les lignes 130 et les sorties 136.5 et 136.2, et établissant la liaison d'interconnexion entre ces sorties et les lignes d'interconnexion 133, 134 : dans ce cas, le freinage (et l'anti-patinage) de la roue numérotée 5 est commandé par la servo-valve 123.6 associée au freinage (et à l'anti-patinage) de la roue numérotée 6, et le freinage de la roue numérotée 2 est commandé par la servo-valve 123.1 associée au freinage (et à l'anti-patinage) de la roue numérotée 1. On a illustré ici les tiroirs 127 et 128 sous la forme de deux tiroirs doubles, mais il va de soi que l'on pourra prévoir en variante de remplacer chaque tiroir double par une paire de tiroirs simples.

On va maintenant décrire le dispositif 100 qui est illustré de manière plus détaillée sur la figure 3, dans le cas d'une commande de freinage d'un train de seize roues.

Sur la figure 3, on constate que la source de pression hydraulique associée au premier circuit hydraulique 101 est ici double, avec une première source 103.1 servant à alimenter une moitié 108.1 du double distributeur progressif, et une source 103.2 servant à alimenter l'autre moitié 108.2 dudit distributeur progressif, ce dernier organe étant ici dédoublé structurellement pour une affectation droite/gauche. La source 103.1 est en l'espèce équipée d'un accumulateur hydraulique 146, et de deux clapets anti-retour 147, et la source 103.2 est équipée d'une électrovanne supplémentaire 148 fonctionnant en tout ou rien, dont on distingue l'actionneur associé 149, ladite électrovanne étant commandée électriquement par l'unité de pilotage 105, et d'un clapet anti-retour 153.

En variante, on pourra naturellement prévoir une source de pression hydraulique unique alimentant simultanément chaque moitié 108.1, 108.2 du double distributeur progressif ainsi que l'électrovanne 151, ce qui a été représenté schématiquement en pointillés par une ligne d'alimentation 103.3, avec alors un clapet anti-retour associé 165.

La source de pression hydraulique 104 associée au deuxième circuit 102 est quant à elle avantageusement équipée d'un accumulateur hydraulique 155, et d'un clapet anti-retour 156, disposés en amont de l'électrovanne 152 qui est commandée électriquement par l'unité de pilotage 105.

Le dispositif de freinage 100 est en l'espèce équipé de quatre platines de commande de freinage 120, dont la structure est conforme à celle déjà décrite en référence à la figure 2, avec une représentation schématique des roues R1, R2, R5, R6 associées à un atterrisseur gauche de voilure, les autres roues du train de roues n'étant alors que schématisées par les sorties correspondantes des autres platines de commande et de freinage. Comme précédemment, on a affecté les références 135 et 136 des sorties de chacune des autres platines du numéro de la roue correspondante, avec successivement les sorties 135.9, 135.14, 136.13, 136.10, puis les sorties 135.11, 135.16, 136.15, 136.12, et enfin les sorties 135.3, 135.8, 136.7, 136.4.

On distingue également sur la figure 3 la ligne de retour 157 associée au circuit 101, et la ligne de retour 158 associée au deuxième circuit 102. Si l'on se réfère à la structure de la platine de commande de freinage 120 illustrée en figure 2, ceci signifie que la sortie de retour 138 associée au circuit 101 est,pour chaque platine 120, reliée à la ligne de retour 157, et que la sortie de retour 139 associée au deuxième circuit 102 est, pour chaque platine, reliée à la ligne de retour associée 158. Il est intéressant de noter que la ligne de retour 157 du circuit 101 est en outre équipée d'une électrovanne 159, dont l'actionneur associé est référencé 160, en amont d'un clapet anti-retour 161, la ligne de retour 158 étant quant à elle seulement équipée d'un clapet anti-retour 162. Ainsi qu'on le verra plus loin, en se référant à la figure 4f, l'électrovanne 159 apporte un avantage supplémentaire en cas de panne, dans une situation de parcage, car cette électrovanne permet d'emprisonner la pression dans les freins pour le blocage des roues position de parcage.

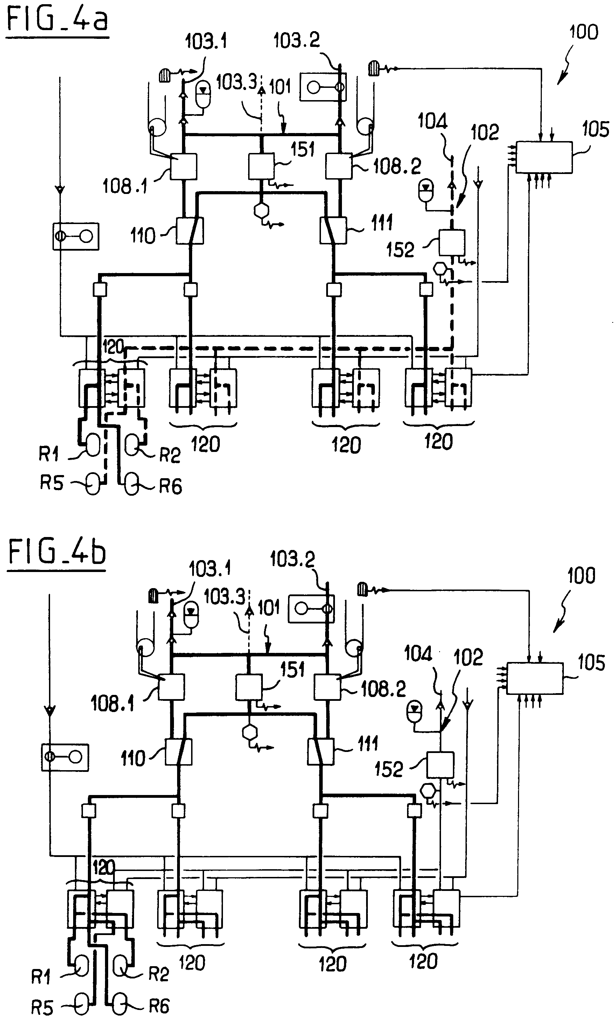

On va maintenant décrire schématiquement le fonctionnement du dispositif selon l'invention, tout d'abord dans une situation de fonctionnement normal en se référant à la figure 4a, et ensuite dans diverses situations de panne en se référant aux figures 4b à 4f.

Sur la figure 4a, le fluide hydraulique arrivant par la double source 103.1 et 103.2 du premier circuit 101 passe normalement par la servo-valve 151 puis par les deux clapets navettes 110, 111, pour aller jusqu'aux platines de commande de freinage 120 auxquelles arrive le fluide hydraulique arrivant par la source 104 du deuxième circuit 102, l'ensemble concernant finalement le groupe de quatre freins associé à chacune de ces platines. Dans ce cas, le fluide hydraulique qui passe par les clapets navettes 110, 111 est à la pression nominale, et les électrovannes 151, 152 sont commandées simultanément par l'unité de pilotage 105, de façon à amener la pression hydraulique aux entrées 121 des platines de commande de freinage 120, de sorte que chaque frein est individuellement contrôlé par la servovalve de freinage et d'anti-patinage associée 123.i, 124.j pour chaque frein de roues respectivement Ri, Rj. Les clapets navettes 110, 111 sont donc en position de freinage par câble, c'est-à-dire que la commande de freinage est mécanico-hydraulique.

Sur la figure 4b, on distingue une première situation de panne possible, qui concerne le deuxième circuit hydraulique 102, par exemple avec une perte de la source hydraulique 104, ou encore un dysfonctionnement dans l'ouverture de l'électrovanne 152. Dans ce cas, les entrées 122 de chaque platine de commande de freinage 120 ne sont plus alimentées en pression ; par suite, pour chacune de ces platines, le tiroir coulissant 127 reste poussé (la pression hydraulique du fluide entrant en 121 maintient en effet en position le tiroir 127), tandis que le tiroir coulissant 128 est déplacé sous l'action de son ressort 143, ce qui établit la connexion fluidique avec les sorties associées alimentées en pression par l'entrée 121 de chaque platine. Dans ce cas, chaque servo-valve de freinage et d'anti-patinage 123 de chaque platine de commande de freinage 120 commande deux freins, et le dispositif fonctionne en mode appairé sur le premier circuit 101, avec une commande électrique. Si l'on considère l'ensemble de quatre roues représenté, les roues R1 et R2 sont contrôlées par la servo-valve 123.1 de la première platine de commande de freinage 120, tandis que les roues R5 et R6 sont contrôlées par l'autre servo-valve 123.6 de la même platine.

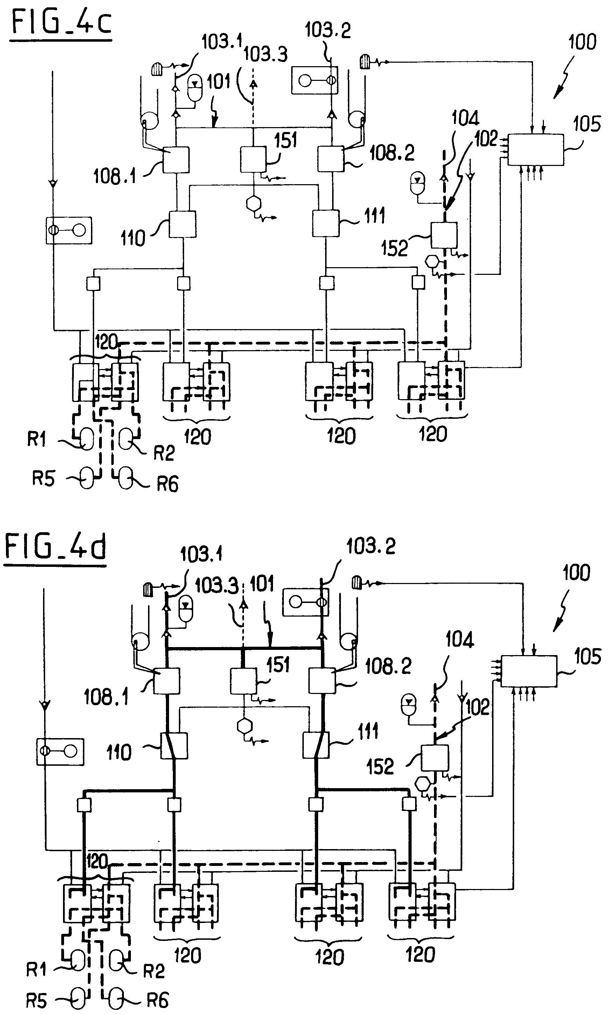

En figure 4c, l'hypothèse de panne correspond à une perte hydraulique sur le premier circuit 101. Dans ce cas, la source 104 du deuxième circuit hydraulique 102 intervient seule, et, dans chaque platine de commande de freinage 120, le tiroir coulissant 127 est déplacé par son ressort associé 142, tandis que le tiroir coulissant 128 reste poussé. On trouve alors un mode de freinage électrique associé au seul deuxième circuit 102, et les servovalves concernées de chaque platine de commande de freinage 120 contrôlent chacune deux freins de roues. En particulier, si l'on considère les quatre roues schématisées sur la figure, les roues R1 et R2 sont contrôlées par la servovalve 124.2 de la première platine de commande de freinage 120, tandis que les roues R5 et R6 sont contrôlées par la servo-valve 124.5 de cette même platine.

Sur la figure 4d, l'hypothèse de panne correspond à un dysfonctionnement de l'électrovanne 151. Si l'électrovanne 151 ne s'ouvre pas normalement, les clapets navettes 110, 111 ne reçoivent plus que la pression détendue provenant de chaque distributeur progressif 108.1, 108.2, de sorte que la bille de ces deux clapets navettes se déplace. La pression hydraulique détendue arrive alors jusqu'aux entrées 121 de chacune des platines de commande de freinage 120. Les moitiés gauches de chacune de ces platines sont donc alimentées en pression, mais avec une pression détendue : si le tarage des ressorts des deux tiroirs coulissants de ces platines est choisi avec une valeur proche de la pression maximale, alors le tiroir coulissant 127 de chacune de ces platines est automatiquement déplacé sous la poussée du ressort associé 142, le tiroir coulissant 128 de ces platines restant quant à lui poussé sous l'action du fluide de la deuxième source hydraulique 104 qui alimente normalement le deuxième circuit 102. On retombe alors, au niveau de chacune des platines de commande de freinage 120, sur une commande de freinage qui correspond à celle déjà rencontrée dans l'hypothèse de panne décrite en regard de la figure 4c. Il s'agit là encore d'une commande de freinage électrique, en mode appairé, déterminée par le deuxième circuit 102.

L'hypothèse de la figure 4e correspond au même type de panne que précédemment, avec un dysfonctionnement de l'électrovanne 151, mais dans le cas où les tiroirs sont de structure différente, avec des ressorts associés à ces tiroirs qui sont tarés différemment. Dans ce cas, la bille des clapets navettes 110, 111 est déplacée comme dans le cas de la figure 4d, mais les deux tiroirs coulissants 127, 128 de chaque platine de commande de freinage 120 restent poussés. On trouve alors une commande de freinage électrique pour les paires de roues associées à la moitié droite de chacune des platines (circuit 102), alors que la commande est du type mécanico-hydraulique pour les roues associées à la moitié gauche de ces platines (circuit 101). Il convient en outre d'observer que l'unité de pilotage 105 reçoit les informations relatives aux pressions associées aux deux électrovannes 151, 152, ce qui donne au pilote la possibilité de déclencher une commande d'inhibition de l'électrovanne 152, comme si une panne sur le deuxième circuit 102 était volontairement déclenchée, pour aboutir à une alimentation assurée par le double distributeur progressif 108.1, 108.2.

La figure 4f illustre enfin une hypothèse de panne qui correspond à une perte de la génération électrique de l'avion. Dans ce cas, les électrovannes 151 et 152 sont en position de repos, c'est-à-dire qu'elles sont fermées. La pression détendue sortant des distributeurs progressifs 108.1, 108.2 provoque comme précédemment le déplacement de la bille des clapets navettes 110, 111, et, pour chaque platine de commande de freinage 120, le tiroir coulissant 127 reste poussé par la pression hydraulique arrivant par le premier circuit 101, tandis que le tiroir coulissant 128 est quant à lui déplacé par le ressort associé. On retrouve là encore un mode de freinage et d'anti-patinage appairé, chaque servo-valve de la moitié gauche de chacune des platines de commande de freinage permettant de commander le freinage et l'anti-patinage de deux roues. Il convient d'observer que l'agencement symétrique des deux circuits internes des platines de commande de freinage 120, lequel agencement a été illustré en figure 2, procure un avantage supplémentaire dans la mesure où le pilote conserve intégralement la possibilité de contrôler la dirigeabilité de l'avion grâce à l'équilibre du freinage et de l'anti-patinage entre les roues de gauche et les roues de droite.

Ainsi que cela a été dit plus haut, la ligne de retour 157 du premier circuit 101 est équipée d'une électrovanne 159 en amont du clapet anti-retour associé 161 : cette électrovanne 159, lorsqu'elle est excitée, permet d'emprisonner la pression dans les freins pour leur blocage en position de parcage de l'avion, les pédales de frein étant naturellement maintenues enfoncées. Ainsi, même en cas de perte de la génération électrique, on parvient encore à conserver toute la sécurité d'un freinage de parcage, sans qu'il soit besoin de prévoir un circuit de secours supplémentaire pour cette situation. On pourra naturellement ajouter une électrovanne supplémentaire sur la ligne de retour 157 du premier circuit 101, cette électrovanne n'étant pas représentée ici, afin d'éviter de vider les accumulateurs, conformément à une technique classique.

On est ainsi parvenu à réaliser un dispositif de freinage dont la structure est à la fois simple et fiable (avec en particulier un nombre minimal de servo-valves à double fonction, c'est-à-dire freinage et anti-patinage), et qui permet de faire face à de multiples pannes possibles sans être tributaire de la seule intervention du pilote, en tirant ainsi un parti optimal des redondances prévues sur le circuit de freinage. La sélection opérée en aval grâce aux platines de commande de freinage procure ainsi des avantages très importants par rapport à la sélection opérée en amont au moyen d'un sélecteur automatique, éventuellement commandé, comme c'était le cas pour les techniques antérieures. La sécurité est élevée dans la mesure où l'on dispose avec deux sources de trois moyens pour arriver à chaque frein, et où l'on dispose d'une reconfiguration automatique (par comparaison de pressions) qui ne dépend donc pas du calculateur ou d'une action du pilote. Enfin, la structure plus simple du dispositif a pour effet de diminuer les temps de montage.

## Revendications

1. Dispositif (100) de freinage électro-hydraulique d'un train de roues d'aéronef, dont les roues (R) sont réparties en deux groupes agencés symétriquement de part et d'autre d'un plan longitudinal médian de l'aéronef, chaque roue (R) étant équipée d'un frein (F) actionné à partir de pédales de frein (106), par une servo-valve de freinage et d'anti-patinage associée (123, 124) commandée électriquement par une unité de pilotage (105) qui mesure une information correspondant à l'enfoncement desdites pédales et à la vitesse de cette roue, caractérisé par le fait qu'il comporte deux sources de pression hydraulique (103, 104) alimentant chacune un circuit hydraulique (101, 102) menant, par l'intermédiaire de platines de commande de freinage (120) à double entrée, aux freins (F) des deux groupes de roues, avec un premier circuit (101) reliant, par l'intermédiaire de deux clapets navettes (110, 111) associés chacun à un groupe de freins de roues, soit une première électrovanne (151) commandée électriquement par l'unité de pilotage (105), soit un double distributeur progressif (108) commandé mécaniquement par les pédales de frein, à une première entrée (121) de chacune des platines de commande de freinage (120), et un deuxième circuit (102) reliant directement une deuxième électrovanne (152), également commandée électriquement par l'unité de pilotage (105), à une deuxième entrée (122) de chacune des platines de commande de freinage (120), chaque platine de commande de freinage (120) étant agencée avec deux circuits internes symétriques comportant chacun une servo-valve (123, 124) par frein concerné, ces deux circuits internes étant en outre interconnectés au niveau d'un clapet commandé respectif (127, 128) et débouchant de cette platine, en aval desdits clapets commandés (127, 128), par deux sorties associées (135, 136) de ladite platine menant aux freins de roues (F), de façon qu'en cas de panne sur l'un des deux circuits hydrauliques (101, 102), les servo-valves associées à l'autre circuit hydraulique permettent un contrôle du freinage et de l'antipatinage selon un mode tandem appairé, avec une reconfiguration automatique.

2. Dispositif selon la revendication 1, caractérisé par le fait que la source de pression hydraulique associée au premier circuit hydraulique (101) est double, avec une source (103.1) équipée d'un accumulateur hydraulique (146) pour alimenter une moitié (108.1) du double distributeur progressif, et une source (103.2) équipée d'une troisième électro-vanne (148) commandée électriquement par l'unité de pilotage (105) pour alimenter l'autre moitié (108.2) dudit distributeur progressif, ces deux sources (103.1, 103.2) alimentant en outre la première électrovanne (151).

3. Dispositif selon la revendication 1, caractérisé par le fait que la source de pression hydraulique associée au premier circuit hydraulique (101) est une source unique (103.3) alimentant simultanément chaque moitié (108.1, 108.2) du double distributeur progressif ainsi que la première électrovanne (151).

4. Dispositif selon l'une des revendications 1 à 3, caractérisé par le fait que la source de pression hydraulique (104) associée au deuxième circuit (102) est équipée d'un accumulateur hydraulique (155).

5. Dispositif selon l'une des revendications 1 à 4, caractérisé par le fait que les clapets commandés sont des tiroirs coulissants (127, 128) chargés par un ressort respectif (142, 143) dont le tarage correspond de préférence sensiblement à la pression maximale prévue.

6. Dispositif selon la revendication 5, dans lequel les deux circuits internes de chaque platine de commande de freinage (120) ont chacun une seule sortie, caractérisé par le fait que les clapets commandés associés (127, 128) sont des tiroirs simples.

7. Dispositif selon la revendication 5, dans lequel les deux circuits internes de chaque platine de commande de freinage (120) ont chacun deux sorties, caractérisé par le fait que les clapets commandés associés (127, 128) sont des tiroirs doubles ou des paires de tiroirs simples.

8. Dispositif selon la revendication 6 ou 7, caractérisé par le fait que les deux circuits internes comportent un fusible hydraulique (125, 126) entre chaque servo-valve (123, 124) et le clapet commandé associé (127, 128).

9. Dispositif selon l'une des revendications 1 à 8, caractérisé par le fait que le premier et le deuxième circuits hydrauliques (101, 102) comportent des lignes de retour (157, 158) qui sont respectivement reliées à chaque platine de commande de freinage (120), ces lignes de retour étant équipées de clapets anti-retour associés (161, 162).

10. Dispositif selon la revendication 9, caractérisé par le fait que la ligne de retour (157) du premier circuit hydraulique (101) est en outre équipée d'une électrovanne (159) en amont du clapet anti-retour associé (161), la fermeture de ladite électrovanne permettant d'emprisonner la pression dans les freins pour leur blocage en position de parcage de l'aéronef.

## Claims

1. An electro-hydraulic braking system (100) for the wheels of aircraft landing gear in which the wheels (R) are distributed in two groups disposed symmetrically on either side of the longitudinal midplane of the aircraft, each wheel (R) being fitted with a brake (F) that is actuated from brake pedals (106), via an associated braking and anti-skid servo-valve (123, 124) electrically controlled by a control unit (105) that obtains measurement data corresponding to the depression of said pedals and to the speed of the wheel, the system being characterized by the fact that it includes two sources (102, 104) of hydraulic pressure, each feeding a corresponding hydraulic circuit (101, 102) leading via braking control stages (120) having two inlets to the brakes (F) of two groups of wheels, with a first circuit (101) connecting a first inlet (121) of each of the braking control stages (120), via two shuttle valves (110, 111) each associated with the brakes of one group of wheels, either to a first solenoid valve (151) electrically controlled by the control unit (105) or else to a double metering valve (108) that is mechanically controlled by the brake pedals and with a second circuit (102) directly connecting a second inlet (122) of each of the braking control stages (120) to a second solenoid valve (152) likewise electrically controlled by the control unit (105), each braking control stage (120) being organized about two symmetrical internal circuits each including one servo-valve (123, 124) per associated brake, said two internal circuits additionally being cross-connected via a respective controlled valve (127, 128) and each braking control stage terminating, downstream of these control valves (127, 128), via an associated outlet (135, 136) of said stage leading to the wheel brakes (F), so that in the event of a breakdown in one or other of the two hydraulic circuits (101, 102), the servo-valves associated with the other hydraulic circuit enable braking and anti-skid control to be performed in a paired tandem mode, with reconfiguration being automatic.

2. A system according to claim 1, characterized by the fact that the source of hydraulic pressure associated with the first hydraulic circuit (101) is duplicated, having a first source (103.1) fitted with a hydraulic accumulator (146) for feeding one-half (108.1) of the double metering valve, and a second source (103.2) fitted with a third solenoid valve (148) under electrical control of the control unit (105) to feed the other half (108.2) of said metering valve, said two sources (103.1, 103.2) also feeding the first solenoid valve (151).

3. A system according to claim 1, characterized by the fact that the source of hydraulic pressure associated with the first hydraulic circuit (101) is a single source (103.3) simultaneously feeding each half (108.1, 108.2) of the double metering valve, and also feeding the first solenoid valve (151).

4. A system according to any one of claims 1 to 3, characterized by the fact that the source of hydraulic pressure (104) associated with the second circuit (102) is fitted with a hydraulic accumulator (155).

5. A system according to any one of claims 1 to 4, characterized by the fact that the controlled valves are slide valves (127, 128) biased by respective springs (142, 143) preferably rated to correspond substantially to maximum design pressure.

6. A system according to claim 5, in which each of the two internal circuits of each braking control stage (120) each has a single outlet, characterized by the fact that the associated controlled valves (127, 128) are single slide valves.

7. A system according to claim 5, in which each of the two internal circuits of each braking control stage (120) each has two outlets, characterized by the fact that the associated controlled valves (127, 128) are double slide valves or pairs of single slide valves.

8. A system according to claim 6 or 7, characterized by the fact that the two internal circuits include respective hydraulic fuses (125, 126) between each of the servo-valves (123, 124) and the associated controlled valves (127, 128).

9. A system according to any one of claims 1 to 8, characterized by the fact that the first and second hydraulic circuits (101, 102) include return lines (157, 158) respectively connected to each of the braking control stages (120), said return lines being fitted with associated non-return valves (161, 162).

10. A system according to claim 9, characterized by the fact that the return line (157) of the first hydraulic circuit (101) is also fitted with a solenoid valve (159) upstream from the associated non-return valve (161), the closing of said solenoid valve enabling pressure to be blocked in the brakes so as to hold them in an aircraft parking position.

## Patentansprüche

1. Elektrohydraulische Bremsvorrichtung (100) für ein Fahrwerk eines Flugzeuges, dessen Räder (R) auf zwei symmetrisch ausgebildete Gruppen beiderseits der Längsmittelebene des Flugzeuges verteilt sind, wobei jedes Rad (R) mit einer Bremse (F) ausgerüstet ist, die durch ein Bremspedal (106) über ein zugehöriges Brems- und Antiblockier-Servoventil (123, 124) betätigt wird, das elektrisch durch eine Steuereinheit (105) gesteuert wird, die eine dem Niedertreten der Pedale und der Geschwindigkeit dieses Rades entsprechende Information mißt, dadurch **gekennzeichnet**, daß sie zwei Hydraulikdruckquellen (103, 104) hat, die jeweils einen Hydraulikkreis (101, 102) speisen, die über zwei Eingänge aufweisende Bremssteuerplatinen (120) zu den Bremsen (F) der beiden Radgruppen führen, wobei ein erster Kreis (101) über zwei Wechselventile (110, 111), die jeweils einer Gruppe von Radbremsen zugeordnet sind, entweder ein von der Steuereinheit (105) elektrisch gesteuertes Elektroventil (151) oder ein mechanisch über die Bremspedale gesteuertes progressives Doppelventil (108) mit einem ersten Eingang (121) jeder der Bremssteuerplatinen (120) verbindet und wobei ein zweiter Kreis (102) ein ebenfalls elektrisch von der Steuereinheit (105) gesteuertes zweites Elektroventil (152) direkt mit einem zweiten Eingang (122) jeder der Bremssteuerplatinen (120) verbindet, wobei jede der Bremssteuerplatinen (120) mit zwei internen symmetrischen Kreisen ausgestattet ist, von denen jeder ein Servoventil (123, 124) pro betreffende Bremse hat, und wobei die beiden internen Kreise ferner auf Höhe eines entsprechenden gesteuerten Ventils (127, 128) miteinander verbunden sind und stromabwärts des genannten gesteuerten Ventils (127, 128) in zwei zugehörige Ausgänge (135, 136) dieser Platine münden, welche zu den Radbremsen (F) führen, derart, daß im Falle eines Ausfalls einer der beiden Hydraulikkreise (101, 102) die zum anderen Hydraulikkreis gehörenden Servoventile eine Steuerung des Brems- und Antiblockiervorganges gemäß einem unpaarigen Tandemmodus mit einer automatischen Rekonfiguration erlauben.

2. Vorrichtung nach Anspruch 1, dadurch **gekennzeichnet**, daß die dem ersten Hydraulikkreis (101) zugeordnete Hydraulikdruckquelle doppelt ausgeführt ist mit einer Quelle (103.1), die einen Hydraulikspeicher (146) zum Speisen einer Hälfte (108.1) des progressiven Doppelventils hat, und einer Quelle (103.2), die mit einem dritten von der Steuereinheit (105) gesteuerten Elektroventil (148) ausgerüstet ist, um die andere Hälfte (108.2) des progressiven Doppelventils zu speisen, wobei beide Quellen (103.1, 103.2) ferner das erste Elektroventil (151) speisen.

3. Vorrichtung nach Anspruch 1, dadurch **gekennzeichnet**, daß die dem ersten Hydraulikkreis (101) zugeordnete Hydraulikdruckquelle eine einzige Quelle (103.3) ist, welche gleichzeitig beide Hälften (108.1, 108.2) des progressiven Doppelventils sowie das erste Elektroventil (151) speist.

4. Vorrichtung nach einem der Ansprüche 1 bis 3, dadurch **gekennzeichnet**, daß die dem zweiten Kreis (102) zugeordnete Hydraulikdruckquelle (104) mit einem Hydraulikspeicher (155) versehen ist.

5. Vorrichtung nach einem der Ansprüche 1 bis 4, dadurch **gekennzeichnet**, daß die gesteuerten Ventile Schieber (127, 128) sind, die jeweils von einer Feder (142, 143) beaufschlagt werden, deren Eichung vorzugsweise im wesentlichem dem maximal vorgesehenen Druck entspricht.

6. Vorrichtung nach Anspruch 5, wobei die beiden inneren Kreise jeder Bremssteuerplatine (120) jeweils einen einzigen Ausgang haben, dadurch **gekennzeichnet**, daß die zugeordneten gesteuerten Ventile (127, 128) einfache Schieber sind.

7. Vorrichtung nach Anspruch 5, wobei die beiden internen Kreise jeder Bremssteuerplatine (120) jeweils zwei Ausgänge haben, dadurch **gekennzeichnet**, daß die zugehörigen gesteuerten Ventile (127, 128) Doppelschieber oder Paare von einfachen Schiebern sind.

8. Vorrichtung nach Anspruch 6 oder 7, dadurch **gekennzeichnet**, daß die beiden internen Kreise eine hydraulische Sicherung (125, 126) zwischen jedem Servoventil (123, 124) und dem zugehörigen gesteuerten Ventil (127, 128) haben.

9. Vorrichtung nach einem der Ansprüche 1 bis 8, dadurch **gekennzeichnet**, daß der erste und der zweite Hydraulikkreis (101, 102) Rückflußleitungen (157, 158) haben, die mit jeder Bremssteuerplatine (120) verbunden sind, wobei die Rückflußleitungen mit zugehörigen Rückschlagventilen (161, 162) versehen sind.

10. Vorrichtung nach Anspruch 9, dadurch **gekennzeichnet**, daß die Rückflußleitung (157) des ersten Hydraulikkreises (101) ferner mit einem Elektroventil (159) stromaufwärts des zugehörigen Rückschlagventils (161) versehen ist, wobei das Schließen des Elektroventils die Möglichkeit gibt, den Druck in den Bremsen zum Blockieren derselben in einer Parkposition des Flugzeuges aufrechtzuhalten.
